# EUROPEAN PATENT APPLICATION

(11) **EP 4 783 114 A1**
(43) Date of publication of application: **29.07.2026**
(21) Application number: 25154317.9
(22) Date of filing: 28.01.2025
(51) Int. Cl.: G06T 7/33

(54) **DEVICE, SYSTEM AND METHOD FOR PERFORMING COMPARABLE MEASUREMENTS OF A TARGET OBJECT IN MEDICAL IMAGES**

(71) Applicant: Koninklijke Philips N.V., 5656 AE Eindhoven (NL)
(72) Inventor: CAROLUS, Heike, Eindhoven (NL); NICKISCH, Hannes, Eindhoven (NL); HEESE, Harald Sepp, 5656AG Eindhoven (NL)
(74) Representative: Philips Intellectual Property & Standards

(57) **Abstract**

The present invention relates to a device, system and method for performing comparable measurements of a target object in medical images. The device comprises an input unit configured to obtain a first image and a second image of the target object, the first image comprising a first coordinate system; a processing unit configured to perform elastic registration to map the first image, including the first coordinate system, to the second image, and to extract a slice from the second image based on the mapped first coordinate system; and an output unit configured to provide information about the extracted slice to a display unit for displaying the slice to a user for comparable measurement of the target object.

## Description

### FIELD OF THE INVENTION

The present invention relates to a device for performing comparable measurements of a target object in medical images. The present invention further relates to a corresponding system and method.

### BACKGROUND OF THE INVENTION

Diameter measurements, namely long-axis and short-axis diameters (LAD / SAD), of tumors, metastases, lymph nodes, or other targets are very critical in radiology and are used to measure the size of these targets. They are an important means in cancer diagnosis and treatment response evaluation.

The short-axis measurement definition stems from the limited capabilities available in PACS (Picture Archive and Communication Systems) commonly used in healthcare. Usually, proceedings are as follows: Find the slice where the target has the largest diameter, this is measured as the long-axis diameter (LAD). Perpendicular to this axis, find the longest diameter of the object in this slice, called the short-axis diameter (SAD). Naturally, due to time restrictions, there is a lot of eyeballing involved in the determination of the LAD and SAD.

Following the RECIST (Response Evaluation Criteria in Solid Tumors) 1.1 guidelines for tumor assessment, which are a standardized set of guidelines used to asses the response of solid tumors to treatment in clinical trials, up to five target lesions and five lymph nodes should be measured. The same tumors and nodes will be measured in follow-up exams to detect a change in size of the targets. One can roughly say that if the diameter changes by 20%, the target is said to have changed its size. This threshold is rather coarse as it also takes imprecisions in the measurements into account. In other words, measurements are assessed at time of diagnosis and in follow-up scans and differences between those size measurements are used to assess tumor growth or shrinkage which has a strong impact on subsequent therapeutic decisions.

Nevertheless, measurements are often not truly comparable as there are strong inter- and intra-reader differences when performing the measurements. SAD and LAD can be computed automatically if a segmentation of the target is available, yielding a more robust and reproducible result. Yet, in clinical practice, both measurements are mostly done manually, as this is quicker than segmenting the target, and studies have shown clear intra- and inter-observer differences in the measurements. Hence, already the SAD/LAD measurements in the base-line scan will mostly likely not be perfect. In the follow-up scan, a second measurement will be performed, which underlies the same imperfections as the first one.

In addition, the orientation of the target in the image might be different, e.g., due to different scan orientation, different patient positioning, breathing state, cardiac phase, filling of bladder or colon, etc. As the manual measurement can usually only be done in the axial slice, this second measurement might not even relate to the first measurement. This is especially true for target objects deviating from a round shape, as small rotations of either the target object and/or change in image orientation will lead to large differences between the measurements of the two time points. Nevertheless, both measurements will be compared to assess treatment response and will be the basis for treatment decisions.

### SUMMARY OF THE INVENTION

It is an object of the present invention to provide consistent and comparable (SAD/LAD) measurements of target objects, such as tumors or lymph nodes, in medical images across different images, particularly in view for follow-up exams. The invention aims to address variability in measurements caused by inter- and intra-observer differences, changes in patient positioning, and differences in imaging orientations between baseline and follow-up scans.

In a first aspect of the present invention a device for performing comparable measurements of a target object in medical images is presented, the device comprising:
- an input unit configured to obtain a first image and a second image of the target object, the first image comprising a first coordinate system;
- a processing unit configured to
   perform elastic registration to map the first image, including the first coordinate system, to the second image, and
   extract a slice from the second image based on the mapped first coordinate system; and
- an output unit configured to provide information about the extracted slice to a display unit for displaying the slice to a user for comparable measurement of the target object.

In a second aspect of the present invention a system for performing comparable measurements of a target object in medical images is presented, the system comprising:
- a device for performing comparable measurements of a target object in medical images as presented herein; and
- a display unit configured to display the extracted slice to the user for comparable measurement of the target object based on the information about the extracted slice.

In yet further aspects of the present invention, there are provided a corresponding method, a computer program which comprises program code means for causing a computer to perform the steps of the method disclosed herein when said computer program is carried out on a computer as well as a non-transitory computer-readable recording medium that stores therein a computer program product, which, when executed by a processing unit, causes the method disclosed herein to be performed.

Preferred embodiments of the invention are defined in the dependent claims. It shall be understood that the claimed method, system, computer program and medium have similar and/or identical preferred embodiments as the claimed device, in particular as defined in the dependent claims and as disclosed herein.

The present invention is based on the idea to leverage registration techniques to map the axes of a (first) coordinate system corresponding to a first measurement (i.e. first image / scan) to a second measurement (i.e. second image / scan). In particular, the first scan is registered to the second scan using an elastic registration algorithm, i.e. a deformation. With the elastic registration a precise mapping that accounts for any changes in patient anatomy (breathing motion, etc.) and orientation can be achieved. Hence, the aim of the registration is to find a (potentially oblique) slice in the second scan which corresponds to the view where the first measurement was performed. By this means, measurements will become more comparable and robust while at the same time being less subjective, i.e. prone to human error. However, the general notion of 2D measurements, which the user can comprehensively appreciate on a single screen, can be maintained.

In general, the first image and the second image may originate from follow-up scans, time series data, or different imaging modalities. These modalities can include both 2D and 3D imaging techniques, such as CT scans, MR scans, X-rays, ultrasound images etc., or combinations thereof (e.g., one image from a CT scan and the other from an MR scan, or an X-ray combined with a 3D imaging dataset). The invention is designed to accommodate variations in image acquisition protocols, resolutions, orientations, and imaging dimensions, ensuring that the mapping and measurement processes remain accurate and consistent across diverse clinical scenarios.

The axes of the first coordinate system are usually given by the short-axis and long-axis diameters of the target object and are usually measured manually. The axes x and y (together with an axis z orthogonal to the axial slice) may be stored as coordinate system of the first image.

In an embodiment of the device, the first coordinate system comprises a first axis and a second axis, wherein the second axis is oriented perpendicular to the first axis, wherein the first axis and the origin of the coordinate system are obtained from manual definition of a user (of the device) or by segmentation (the segmentation being performed by the processing unit, for example). (preferably with the origin of the coordinate system at the center of the measurement).

Preferably, the first axis is represented by the short axis or long axis of the target object measured (and the second axis is represented by the corresponding other axis).

It might be that for the first image, the "coordinate system" at first comprises only a single axis, i.e. there is missing a second axis. In this case the processor of the device may be configured to estimate any missing axis by defining an axis perpendicular to the given axis (with the origin of the coordinate system at the center of the measurement (of the LAD/SAD)).The generation of the first coordinate system, whether based on LAD/SAD measurements, segmentation of the target object, or the definition of a perpendicular axis, ensures that the coordinate system is robust and tailored to the geometry of the target object. This improves the consistency of measurements across images, minimizing user-dependent variability. Segmenting the object provides additional precision, especially for irregularly shaped targets. Defining a second axis ensures that measurements of the target object are performed within a well-defined plane, leading to reliable baseline data, i.e. data from the first image, for follow-up evaluations.

In a preferred embodiment the processing unit is further configured to perform rigid registration in a region of interest, ROI, around of the target object to improve the precision of the mapping of the first coordinate system to the second image.

In some cases, the elastic registration (i.e. deformation, non-rigid registration) may not be optimal to map the coordinate system. This is due to the fact that the (first) coordinate system will also be transformed in an elastic manner resulting in curves instead of straight lines for the axes, which may not be suitable as coordinate system. Thus, it is preferred that the first elastic registration is followed by a second rigid registration (i.e. rigid transformation), the rigid registration comprising any one of rotation, scaling and translation. The region of interest around of the target object preferably is a small neighbourhood of the target object.

In general, rigid registration in the region of interest (ROI) provides enhanced precision compared to elastic registration alone. By limiting transformations to rotation, scaling, and translation, rigid registration eliminates distortions introduced by non-linear elastic deformations, which may compromise the accuracy of mapped coordinate systems. This precise alignment ensures that measurements in the second image are directly comparable to baseline measurements (i.e. the measurements corresponding to the first image), thereby supporting consistent treatment decisions. The use of a small ROI around the target object further focuses the alignment process, improving computational efficiency and reducing potential errors from irrelevant image areas.

In a further preferred embodiment, the processing unit is configured to perform the rigid registration after the elastic registration.

Performing rigid registration after elastic registration combines the strengths of both methods. Elastic registration aligns global anatomical features, accommodating patient motion and anatomical changes, while rigid registration refines the alignment locally within the ROI, ensuring that the coordinate system remains consistent and reliable. This stepwise process ensures the robustness of the mapping and reduces errors that may arise from global transformations alone.

In a preferred embodiment, the rigid registration comprises extracting the region of interest around the target object in the first image; mapping edge points of the region of interest to the second image using the elastic registration result; extracting another region of interest enclosing the mapped region of interest in the second image; and mapping the region of interest with the other region of interest by performing the rigid registration.

In other words, after the region of interest is extracted (i.e. selected), the edge points of this first ROI are mapped to the second image using the result of the elastic registration. Another ROI, i.e. a second ROI, enclosing this mapped ROI is selected from the second image. The first ROI is then registered to the second ROI in a rigid manner. The resulting transformation matrix may finally be used to propagate the relevant axes (LAD, SAD, z) of the first coordinate system to the second image.

The described step-by-step rigid registration process, including mapping edge points of the ROI and selecting an enclosing second ROI in the second image, ensures precise localization of the target object. Unnecessary transformations are avoided this way and the structural integrity of the coordinate system is maintained. Propagating the relevant axes (LAD, SAD, and z) to the second image ensures that measurements are consistent, even under variations in image acquisition parameters or patient positioning.

Preferably, the second ROI enclosing the mapped ROI is only insignificantly larger than the mapped ROI (e.g. 5%-20% larger).

In a preferred embodiment of the device, the processing unit is configured to use the origin of the first coordinate system as a reference point for mapping the first image to the second image in the rigid registration.

In other words, the first ROI is registered to the second ROI in a rigid manner using the origin of the first coordinate system as center point. Similarly, the processing unit may be configured to use the origin of the first coordinate system as a reference point for mapping the first image to the second image in the elastic registration.

Using the origin of the first coordinate system as a reference point during the elastic and/or rigid registration enhances the accuracy of the mapping process. It ensures that the transformations are centered around a consistent point, which is crucial for maintaining the spatial relationship of the axes. This leads to more reliable and reproducible mappings, particularly when dealing with irregularly shaped or displaced target objects.

In a further embodiment, the slice extracted from the second image is determined based on the mapped coordinate system of the first image or is chosen to be an axial slice that is closest to the origin of the mapped first coordinate system.

The use of the mapped coordinate system ensures that the extracted slice represents the same anatomical orientation as in the first image, facilitating comparable measurements. Alternatively, selecting an axial slice accommodates clinical guidelines (e.g., RECIST) that may require specific orientations, ensuring compatibility with standard protocols.

In an embodiment of the device, if the slice extracted is chosen to be the axial slice, the processing unit is further configured to project the mapped coordinate system of the first image onto said axial slice, particularly wherein the processing unit is further configured to determine an projection angle between the projected coordinate system of the axial slice and the mapped coordinate system as a confidence measure.

Hence, to be both in line with clinical guidelines (i.e. to perform the measurement of the target object in an axial slice/plane (LAD/SAD measurements by convention take place in an axial slice)) and to ensure that the measurement of the target object can be performed more accurately, the processing unit is configured to project the mapped coordinate system of the first image (i.e. the coordinate system mapped to the second image) onto said axial slice. Preferably, the processing unit is further configured to determine a projection angle between the projected coordinate system of the axial slice and the coordinate system in a state before the projection. In other words, the processing unit is configured to extract both a slice which is determined based on the mapped coordinate system of the first image (which generally is an "optimal" oblique slice) and an axial slice that is closest to the origin of the mapped first coordinate system and to determine an angle between said slices. The angle can be regarded as a confidence measure for the measurement of the target object. In general, the larger the angle, the higher is the risk for incorrect measurements. The output unit of the device may be configured to provide information about the projection angle for further processing, for example, to a display unit for displaying said information.

As in most cases the first image will be an image of the axial plane, the extracted slice will in most cases be an oblique slice and, as a confidence measure, the angle between the (optimal) oblique slice and an axial slice closest to the origin of the mapped coordinate system in the second scan, may be determined to be non-zero. The confidence measure aids clinicians in validating the reliability of the mapping process and ensures that extracted slices align with diagnostic or treatment planning needs.

In a preferred embodiment, the processing unit is configured to extract the slice from the second image using a regression-based approximation of the mapped coordinate system. The regression-based approximation may particularly be used as an alternative to the rigid registration, i.e. when rigid registration is omitted. This approximated coordinate system then defines the location and orientation of the slice that is used for the measurement

For the approximation, the start and end points of the measurements, i.e. the endpoints of the long-axis diameter (LAD) and short-axis diameter (SAD), and potentially the origin of the coordinate system (and optionally additional points along the mapped axes resulting from the elastic registration) may be mapped to the second scan using the elastic registration (deformation). Via regression, a plane could be fitted to those points to span the coordinate system.

In general, regression-based approximation provides a robust alternative to rigid registration when computational simplicity or time constraints are priorities. By using endpoints of LAD and SAD measurements and optionally additional points from elastic registration, this method generates a fitted plane that closely represents the mapped coordinate system. This ensures consistent orientation for slice extraction, even in scenarios where rigid registration may be omitted.

In an embodiment of the system, the display unit is further configured to display the mapped first coordinate system, including the origin and the axes of the first coordinate system on the extracted slice to assist the user in performing comparable measurements of the target object.

Hence, based on the mapped first coordinate system a (potentially) oblique slice is extracted from the second scan and shown to the user for the measurement. In addition, the axes of the coordinate system can be shown to the user. The user can then decide if he/she wants to use these axes for his/her measurements for consistency or if he/she needs to measure along different axes as the shape of the target object has deviated too much from its original shape. Therefore, displaying the mapped coordinate system, including its origin and axes, on the extracted slice enhances user guidance and supports consistent measurements. This visual feedback allows users to verify the accuracy of the mapping and align their measurements with the generated axes. It also provides flexibility for cases where the target object's shape has changed, allowing users to redefine measurement axes as needed.

Preferably, if a true LAD/SAD measurement is required and the mapped coordinate system of the first image (i.e. the coordinate system mapped to the second image) is further projected onto an axial slice as explained above, the display unit may further be configured to display said projected coordinate system and thus enhanced measurements may also be ensured in an axial slice.

In a further embodiment, the system further comprises a user interface configured to obtain user input, including a user-defined adjustment of the region of interest in the second image, wherein the processing unit is configured to refine the mapping of the first coordinate system to the second image based on the user input, and the region of interest in the second image corresponds to the mapped region of interest from the first image.

Preferably, the registration process may (also) be refined once a user confirms the correct mapping between corresponding LAD / SAD measurements in two image volumes (either for a single or multiple target objects).

Incorporating user input for ROI adjustment provides an interactive mechanism to refine the mapping of the coordinate system. This capability is particularly useful in cases where the ROI in the second image does not perfectly align with the target object due to anomalies or complex anatomical changes. By allowing users to fine-tune the ROI, the system enhances both accuracy and user confidence in the mapping process.

### BRIEF DESCRIPTION OF THE DRAWINGS

These and other aspects of the invention will be apparent from and elucidated with reference to the embodiment(s) described hereinafter. In the following drawings
Fig. 1 shows a first image of a target object in an axial view and a coronal view and a second image of target object in an axial and a coronal view;
Fig. 2 shows a schematic diagram of an embodiment of a device according to the present invention;
Fig. 3 shows a schematic diagram of an embodiment of a system according to the present invention;
Fig. 4 shows a flow chart of an embodiment of a method according to the present invention;
Fig. 5 shows a first image of a target object in an axial view and a coronal view and a second image of target object in a coronal view and an oblique view.

### DETAILED DESCRIPTION OF EMBODIMENTS

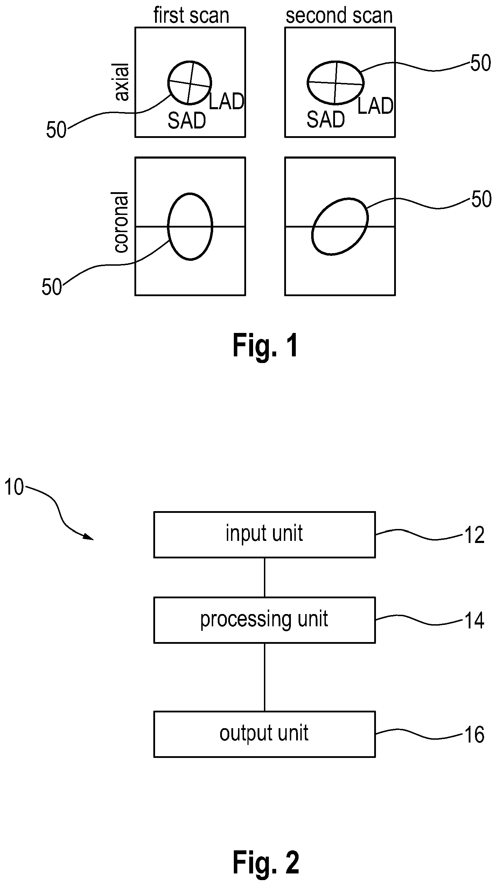

Fig. 1 shows a first image of a target object (e.g. tumor) in an axial view and a coronal view and a second image of that target object in an axial and a coronal view.

On the left of Fig. 1 the first image, i.e. a baseline scan, of target object 50 is shown in the axial and coronal view, on the right, the second image, i.e. a follow-up scan, is shown. The horizontal line in the coronal view indicates the position of the axial slice. In the coronal view, one can see that the target object 50 has the same size in both scans while it is slightly tilted in the second image. In the axial view of the second image, however, the target object 50 appears larger, resulting in a strong difference in the LAD while the size of the target object 50 did not change. Thus, even though there was no tumor growth, a comparison of the SAD and LAD as measured in both images, seems to suggest the opposite.

Fig. 2 shows a schematic diagram of an embodiment of a device 10 according to the present invention. The device 10 may comprise circuitry, e.g. a processor, processing circuitry, a computer, dedicated hardware, etc. that carries out the functions of the device. Separate units or elements may be used that together represent circuitry of the device 10.

In this embodiment, the device 10 comprises an input unit 12, a processing unit 14 and an output unit 16. The input unit 12 is configured to obtain a first image and a second image of the target object 50, wherein the first image comprises a first coordinate system, i.e. there is a first coordinate system associated with the first image. The first and second image may be obtained (e.g. retrieved or received) e.g. from an imaging device 106 or a storage 108. For this purpose, the input unit 12 may be directly or indirectly (e.g. via a network or bus) coupled or connected to the imaging device 106 or the storage. The input unit 12 may thus e.g. be a (wired or wireless) communication interface or data interface, such as a Bluetooth interface, Wi-Fi interface, LAN interface, HDMI interface, direct cable connection, or any other suitable interface allowing data transfer to the device 10.

The device 10 further comprises a processing unit 14 configured to perform elastic registration to map the first image, including its first coordinate system, to a second image of the target object 50 and to extract a slice from the second image based on the mapped first coordinate system. The processing unit 14 may be implemented in software and/or hardware, e.g. as a programmed processor, computer, laptop, PC, workstation, etc.

The device 10 further comprises an output unit 16 configured to provide information about the extracted slice to a display unit 102 for displaying the slice to a user for comparable measurement of the target object 50. The output unit 16 may generally be any interface that provides the generated information, e.g. transmits it to another device or provides it for retrieval by another device, e.g. transmits it to another computer or transfers it directly to the display unit 102 for displaying the extracted slice to a user. It may thus generally be any (wired or wireless) communication or data interface.

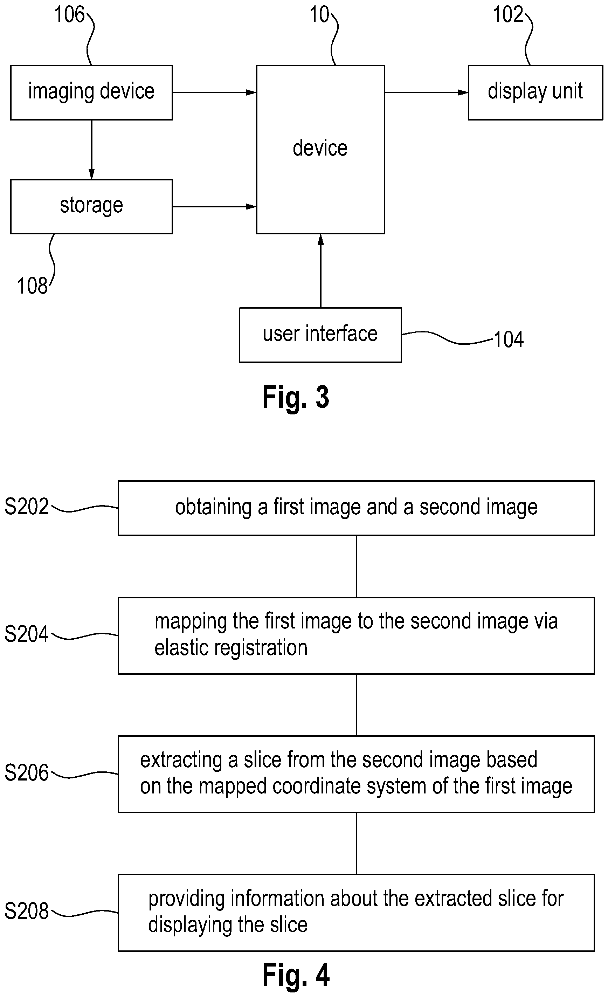

Fig. 3 shows a schematic diagram of an embodiment of a system 100 according to the present invention. In this embodiment, the system comprises an imaging device 106, a storage 108, a device 10 for performing comparable measurements of a target object 50 in medical images according to the present invention; a display unit 102 and a user interface 104. The imaging device 106 is configured to acquire a first image and a second image of the target object. The imaging device 106 may be an MR or CT device, in particular a spectral CT or photon-counting CT device, e.g. a conventionally used CT device for acquiring image data of a target object. The imaging device is configured to acquire the images at different points in time, e.g. before and/or during and/or shortly after an intervention and/or later during one or more checkups.

The device 10 may e.g. be implemented as or in a processor or computer, in software and/or hardware. For instance, a programmed processor may be included in the device 10, which may execute a computer program that may be stored in a memory that is accessed by the processor.

The display unit 102 may e.g. be a monitor or screen of a PC, workstation, laptop tablet, etc., e.g. of a computer that represents the device 10 and is carrying out the method according to the present invention.

The device 10 may directly obtain (i.e. retrieve or receive) the (current) image from the imaging device 106 or from the storage 108, such as a buffer or memory or image repository, e.g. a patient record stored in a hospital's document management system, e.g. via a wired or wireless network. Images (particularly data corresponding to the images) acquired earlier are preferably obtained from the storage 108, such as a buffer or memory or image repository.

A user interface 104, e.g. a touch screen, pointer, computer mouse, etc., may be provided so that a user can provide user input, for instance to interactively mark or correct the ROI in the first and/or second image and/or to navigate through images or even modify one or more parameters used during the image processing.

Fig. 4 shows a flow chart of an embodiment of a method according to the present invention. The steps of the method may be carried out by the device 10, wherein the main steps of the method are carried out by the processing unit 14. The method may e.g. be implemented as a computer program running on a computer or processor.

In a first step S202, a first image and a second image of a target object 50 are obtained, wherein the first image comprises a first coordinate system. In a second step S204, an elastic registration is performed to register (i.e. map) the first image, including the first coordinate system, to the second image. In a third step S206, a slice is extracted form the second image in accordance with the mapped first coordinate system. In a fourth step S208, information about the extracted slice is provided to a user interface 102 for displaying the slice to a user for comparable measurement of the target object 50.

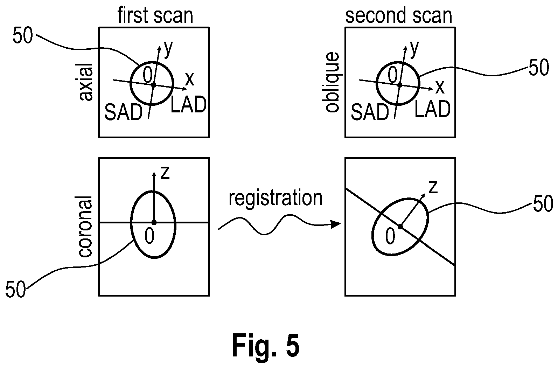

Fig. 5 shows a first image of a target object in an axial view (left side above) and a coronal view (left side below), and a coronal view of the second image (right side below) as well as a slice extracted from the second image after (an elastic and a rigid) registration (right side above). Given a coordinate system that is spanned by the LAD and SAD measurements in the first image (measurement axes x and y; and an axis z perpendicular to x and y), this coordinate system is mapped into the second image via registration, i.e. the first image is registered to the second image. Based on the mapped coordinate system, a (in the given case; not necessarily) oblique slice is resampled from the second image and displayed to the user to perform his/her measurement. In other words, using the mapped coordinate system an oblique slice can be extracted from the scan (as indicated by the straight continuous line in the coronal view of the second scan) and the measurement in the second scan can be performed in the same view as the first measurement. That is, by proposing a slice for measurement with the previously used axes shown to the user particularly intra-/inter-observer error is reduced. In addition, the correspondence of the first and second measurement is increased rendering them better comparable.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Device (10) for performing comparable measurements of a target object (50) in medical images, comprising:
- an input unit (12) configured to obtain a first image and a second image of the target object (50), the first image comprising a first coordinate system;
- a processing unit (14) configured to
perform elastic registration to map the first image, including the first coordinate system, to the second image, and
extract a slice from the second image based on the mapped first coordinate system; and
- an output unit (16) configured to provide information about the extracted slice to a display unit (102) for displaying the slice to a user for comparable measurement of the target object (50).

2. Device (10) according to claim 1,
wherein the first coordinate system comprises a first axis and a second axis, wherein the second axis is oriented perpendicular to the first axis, wherein the first axis and the origin of the coordinate system are obtained from manual definition of a user or by segmentation.

3. Device (10) according to claim 1 or 2,
wherein the processing unit (14) is further configured to perform rigid registration in a region of interest around of the target object (50) to improve the precision of the mapping of the first coordinate system to the second image.

4. Device (10) according to claim 3,
wherein the processing unit (14) is configured to perform the rigid registration after the elastic registration.

5. Device (10) according to claim 3 or 4,
wherein the rigid registration comprises
extracting the region of interest around the target object (50) in the first image;
mapping edge points of the region of interest to the second image using the elastic registration result;
extracting another region of interest enclosing the mapped region of interest in the second image; and
mapping the region of interest with the other region of interest by performing the rigid registration.

6. Device (10) according to any one of claims 3 to 5,
wherein the processing unit (14) is configured to use the origin of the first coordinate system as a reference point for mapping the first image to the second image in the rigid registration.

7. Device (10) according to any one of the preceding claims,
wherein the slice extracted from the second image is determined based on the mapped coordinate system of the first image or is chosen to be an axial slice that is closest to the origin of the mapped first coordinate system.

8. Device (10) according to claim 7, wherein if the slice extracted is chosen to be an axial slice, the processing unit (14) is further configured to project the mapped coordinate system of the first image onto said axial slice, particularly wherein the processing unit (14) is further configured to determine an projection angle between the projected coordinate system of the axial slice and the mapped coordinate system as a confidence measure.

9. Device (10) according to any one of the preceding claims,
wherein the processing unit (14) is configured to extract the slice from the second image using a regression-based approximation of the mapped coordinate system.

10. System (100) for performing comparable measurements of a target object (50) in medical images, comprising:
- a device (10) for performing comparable measurements of a target object (50) in medical images according to any one of the preceding claims; and
- a display unit (102) configured to display the extracted slice to the user for comparable measurement of the target object (50) based on the information about the extracted slice.

11. System (100) according to claim 10,
wherein the display unit (102) is further configured to display the mapped first coordinate system, including the origin and the axes of the first coordinate system on the extracted slice to assist the user in performing comparable measurements of the target object (50).

12. System (100) according to claim 10 or 11,
further comprising a user interface (104) configured to obtain user input, including a user-defined adjustment of the region of interest in the second image, wherein the processing unit (14) is configured to refine the mapping of the first coordinate system to the second image based on the user input, and the region of interest in the second image corresponds to the mapped region of interest from the first image.

13. Method for performing comparable measurements of a target object (50) in medical images, comprising:
- obtaining a first image and a second image of the target object, the first image comprising a first coordinate system;
- performing elastic registration to map the first image, including the first coordinate system, to the second image,
- extracting a slice from the second image based on the mapped first coordinate system; and
- providing information about the extracted slice to a user interface (102) for displaying the slice to a user for comparable measurement of the target object (50).

14. Computer program comprising program code means for causing a computer to carry out the steps of the method as claimed in claim 13 when said computer program is carried out on the computer.
